# EUROPEAN PATENT SPECIFICATION

(11) **EP 2 266 491 B1**
(45) Date of publication and mention of the grant of the patent: **15.05.2019**
(21) Application number: 10179669.6
(22) Date of filing: 29.11.1999
(51) Int. Cl.: A61C 3/00, A61C 7/00, A61C 7/08

(54) **Device and method for forming attachment devices on a tooth**
Vorrichtung und Verfahren zur Herstellung von Befestigungsvorrichtungen auf einem Zahn
Dispositif et procédé pour former des dispositifs de fixation sur une dent

(30) Priority: 30.11.1998 US 110189 P; 04.12.1998 US 110881 P; 16.02.1999 US 250962 P
(43) Date of publication of application: 29.12.2010
(62) Divisional of application: 99959104.3
(73) Proprietor: Align Technology, Inc., San Jose, CA 95134 (US)
(72) Inventor: Phan, Loc, Milpitas, CA 95035 (US); Chishti, Muhammad, Sunnyvale, CA 94086 (US)
(74) Representative: Leach, Sean Adam

(56) References cited:
- US-A- 4 526 540
- US-A- 4 793 803
- US-A- 5 055 039

## Description

### BACKGROUND OF THE INVENTION

The present invention is related generally to the field of orthodontics. More particularly, the present invention is related to improved systems and methods for removably attaching a dental positioning appliance to the dental features of a patient during orthodontic treatment.

Orthodontic treatments involve repositioning misaligned teeth and improving bite configurations for improved cosmetic appearance and dental function. Repositioning teeth is accomplished by applying controlled forces to the teeth over an extended period of time. This is conventionally accomplished by wearing what are commonly referred to as "braces." Braces comprise a variety of appliances such as brackets, bands, archwires, ligatures, and O-rings. The brackets and bands are bonded to the patient's teeth using a suitable material, such as dental adhesive. Once the adhesive has set, the archwire is attached to the brackets by way of slots in the brackets. The archwire links the brackets together and exerts forces on them to move the teeth over time. Twisted wires or elastomeric O-rings are commonly used to reinforce attachment of the archwire to the brackets. Attachment of the archwire to the brackets is known in the art of orthodontia as "ligation" and wires used in this procedure are called "ligatures." The elastomeric O-rings are called "plastics."

After the archwire is in place, periodic meetings with the orthodontist are required, during which the patient's braces will be adjusted. This involves installing different archwires having different force-inducing properties or by replacing or tightening existing ligatures. Between meetings, the patient may be required to wear supplementary appliances, such as elastic bands or headgear, to supply additional or extraoral forces. Elastic bands may be hooked directly on the brackets or mounted on a post.

Although conventional braces are effective, they are often a tedious and time consuming process requiring many visits to the orthodontists office. Moreover, from a patient's perspective, they are unsightly and uncomfortable. Moreover, the archwire and ligatures which connect the brackets in a continuous network make brushing, flossing between the teeth and other dental hygiene procedures difficult, possibly contributing to the development of gingivitis. Consequently, alternative orthodontic treatments are needed. In particular, it would be desirable to use appliances which can be removed by the patient during daily dental hygiene routines, while participating in athletic activities, or for cosmetic purposes.

A particularly promising approach relies on the use of elastic positioning appliances for realigning teeth. Such appliances comprise a thin shell of elastic material that generally conforms to a patient's teeth but is slightly out of alignment with the initial tooth configuration. Placement of the elastic positioner over the teeth applies controlled forces in specific locations to gradually move the teeth into the new configuration. Repetition of this process with successive appliances comprising new configurations eventually move the teeth through a series of intermediate configurations to a final desired configuration. A full description of an exemplary elastic polymeric positioning appliance is described in U.S. Patent No. 5,975,893, and in published PCT application WO 98/58596 which designates the United States and which is assigned to the assignee of the present invention.

In addition to their ease of use, polymeric positioning appliances are generally transparent, providing an improved cosmetic appearance, and impart substantial force on the teeth, due to stiffness of the appliance. The stiffness of an elastic positioning appliance is a result of the modulus of the thermoformable polymer materials from which it is made. The higher the modulus of the materials, the higher the stiffness of the appliance. When a patient positions such an appliance over a prescribed group of teeth, one or more of the teeth will provide a base or anchor region for holding the positioning appliance in place while the stiffness of the polymeric material will impart a resilient repositioning force against one or a portion of the remaining teeth. By designing the appliance to cover the teeth, a much larger contact surface area is afforded compared to traditional spring retainers and wire-based appliances. However, such anchoring and repositioning abilities of removable elastic positioning appliances are still dependent on the physical features and configuration of the patient's teeth, palette, and previous dental work, to name a few. For example, shell-like elastic polymeric positioning appliances have difficulty applying certain forces to individual teeth, such as extrusive force (e.g., pulling or raising a tooth relative to the jaw).

Thus, it would be desirable to provide tooth positioners and systems which apply adequate force in desired directions to selected teeth at specific times during treatment. In particular, it would be desirable to enable the fabrication and use of removable positioners and systems which can apply extrusive, rotational, and other directional forces which have heretofore been difficult to apply with removable positioners. It would also be desirable to reduce the cost of the orthodontic treatment and retain the patient benefits of a removable appliance in cases where they might not otherwise be available. At least some of these objectives will be met by the designs and methods of the present invention described hereinafter.

US Patent 5,055,039 discloses a transfer matrix for positioning prefabricated dental coupling members on teeth, In use coupling members for attachment to teeth are held in holes of the transfer matrix which is positioned over the teeth whilst the coupling are adhered in place.

US Patent 4,793,803 describes a removable tooth positioning appliance and method in which separate appliances are insertable in and removable from the upper and lower jaws of the patient to correct minor malocclusions. The appliance construction has several modifications but consists essentially of a fairly rigid portion which mates with or securely grips the tooth surface, a rigid portion to provide the base and shape, and an intermediate flexible resilient portion interposed between the rigid portion and the base which biases the teeth into the desired position.

US Patent 4,526,540 describes an orthodontic apparatus and method for treating malocclusion which employs a fixture which fits over a tooth on which a bracket is to be affixed. This fixture having an internal cavity which matches the shape and contour of a portion of the tooth, such as the lingual surface, incisal edge and a portion of the labial surface.

### SUMMARY OF THE INVENTION

The present invention is directed to a combination of a template for forming on a target tooth an attachment device and a polymerisable material as defined in claim 1. The present invention is also directed to a method of forming one or more dental attachment devices on a surface of a target tooth as specified in claim 14. Preferred embodiments are according to the dependent claims. The present disclosure also provides improved devices, systems and methods for removably attaching a dental positioning appliance to the dental features of a patient during orthodontic treatment. Such removable dental positioning appliances usually comprise an elastic polymeric shell having a cavity for receiving at least some of a patient's teeth and are often preferred over conventional braces for tooth repositioning due to comfort, appearance and ease of use. These appliances function by applying force to specific surfaces of the teeth or dental features to cause directed movement. However, the type of movement and level of force applied is usually dependent on the surface characteristics and positions of the dental features. In many cases, the native tooth surface(s) and other dental features of a patient are inadequate to provide sufficient anchoring or to impart sufficient force on the teeth to be repositioned. To overcome these limitations, the present disclosure uses one or more attachment devices which may be attached to preselected attachment points on the teeth or dental features to provide the appropriate physical leverage. Specific design and location of these attachment devices may provide newly achievable and/or more effective repositioning forces, anchoring ability and appliance retention. The systems and methods of the present disclosure provide the design, production and use of such attachment devices with removable dental positioning appliances in orthodontic treatment.

The use of attachment devices in combination with removable dental positioning appliances provides the patient with the benefits of removable appliances while retaining the ability to extrude, rotate, and otherwise manipulate teeth as with conventional braces. Like conventional braces, attachment devices may be bonded to the surface of the teeth in order to provide physical features which facilitate the application of controlled force. The attachment devices of the present invention may have a very simple construction, in some instances being only a bump, bead, wedge, or other body or structure which can be fixedly attached to the surface of a tooth or other dental feature in order to transmit force generated by the dental positioning appliance to the dental feature and/or to anchor the positioning appliance to teeth in order to permit the appliance to apply forces elsewhere in the patient's teeth. In such instances, the attachment device acts simply as a handle or lever to assist in the transmission of force between the teeth and the dental positioning appliance. In other instances, the attachment device may feature a hook, similar in design to those used for mounting elastic bands. The hook may be engaged with a number of ligatures, bands, filaments, coils or other connecting members to effect repositioning of the teeth, usually in combination with the dental positioning appliance. The hook may serve as an anchor in the repositioning of other teeth, or it may serve as a point of purchase to apply directed force to the surface of the tooth to which it is bonded.

The attachment devices of the present invention, unlike conventional braces, are typically small, infrequent, (i.e., present on very few of the patient's teeth) unnoticeable to others, and do not interfere with dental hygiene practices. Usually, the attachment device will have a small base e.g., up to 4 mm across (mesial-distal) and up to 6 mm long (gingiva-crown). An attachment device body may typically protrude up to a maximum of 2.5 mm. This is significantly smaller than standard brackets or bands used in convention braces which may protrude up to 4 mm. The devices may be bonded in specific locations throughout the dentition where appropriate and this may only be required at one or a few locations. Thus, the infrequency of the device, in addition to the size, also reduces its visibility and awareness to the patient. Likewise, the attachment device may be bonded to any surface of the teeth, including lingual surfaces which would allow the devices to be largely unnoticeable to others. In these cases, shape and design considerations would prevent any irritation to the contacting tissues, such as the tongue, inner lip and inner cheek. When placed in visible areas, the attachment device may be color matched to the dental surface to further diminish its visibility. In addition, such attachment devices are typically designed to removably attach to a removable dental appliance. Thus, when the appliance is removed, routine brushing, flossing and dental care may be undertaken in the usual manner.

Brackets used with conventional braces, such as those used to support elastic bands or headgear, are limited in design and therefore application of use. Generally, these attachment devices have a large profile, protruding 2-4 mm, which is not conducive to use with elastic positioning appliances or other devices designed to be removably positioned over the attachment device. Likewise, their surface geometry is limited to a few prescribed functions which are specific to use with conventional braces. Thus, they are not adequately capable of providing functions necessary to the present invention, such as removably attaching a dental positioning appliance.

As described herein attachment devices are comprised of an attachment body having a base. The base may simply be the portion of the attachment body which will be bonded to the surface of the dental feature. Alternatively, the base may be an enlarged portion of the body, designed to increase the surface area of the bond. Likewise, the base may be removable or permanently attached. The attachment body may feature a variety of designs, most commonly being bumps, beads, wedges, also including but not limited to hooks, clasps, bands, brackets, buttons, snaps, springs, levers, rods, tubes, coils, indents and/or other protrusions. Each design may serve one or a number of purposes in repositioning of the teeth. For example, a clasp may be used to attach a portion of a removable positioning appliance to the attachment device. This attachment device design may be desired for anchoring of the appliance or applying force to the dental feature to which the attachment device is bonded. Additional devices may be used in conjunction with the attachment body to attach the appliance to the attachment device. For example, adhesives, flexible bands or connecting ligatures may be used in conjunction with the design of the attachment body to aid in connection to the appliance. In one such case, an attachment body located on the lower jaw may be attached to a removable appliance placed on the upper jaw by means of a flexible band. This may afford desired force vectors that are unobtainable by other means. Alternatively, the attachment body may be comprised of specific design features to aid in properly seating a removable elastic repositioning appliance, in addition to anchoring the appliance in place to apply repositioning forces. A preferred embodiment of these design features includes an attachment body with a sloping face e.g., a wedge.

The phrase "dental feature" will apply to any portion of the patient's teeth which may be contacted by a dental positioning appliance and/or engaged by an attachment device. Usually, the dental feature will be a portion of a surface of a natural tooth, but in some instances could be a portion or a surface of an artificial tooth, e.g., a dental implant, or a non-natural surface or repair of a native tooth, e.g., a filling, crown, inlay, restoration, or the like. Thus, the phrase dental feature will generally refer to all natural and non-natural teeth in a patient's dentition. In a second aspect of the present disclosure, the attachment device is bonded to and/or formed over a dental feature in a desired location. The attachment device may be bonded to any of these features with any suitable bonding material, typically dental restorative composites. The location in which one or more of these attachment devices are bonded is dependent upon the desired repositioning goal. The devices may be bonded to any surface of the dental features and may be placed singly or in groups. Likewise, a given attachment device may be bonded to surfaces of more than one dental feature. In a preferred embodiment, an attachment device may placed on each of two teeth located on opposite sides of one or a contiguous group of teeth. When an elastic positioning appliance is inserted and attached to the two attachment devices, an intrusive force may be applied to the tooth or teeth inbetween. This is counterintuitive to the methods of conventional orthodontics in which brackets are bonded to the teeth that require repositioning.

Attachment devices may be constructed from variety of materials, including but not limited to metals, glass or silicone filled polymers, and other composite materials. Such materials are typically designed to be chip, break and shear resistant for durability. The base of the attachment device may be constructed from the same or from different materials as the attachment body. Likewise, the attachment body may be permanently or removably mounted on the base or the body and base may be constructed as one entity.

Attachment devices may be constructed from a polymer material or combination of materials which have been formulated to be sensitive to an environmental condition or external stimulus. Upon exposure to such a condition or stimulus, the material may undergo a predetermined state change, which may be temporary or permanent. For example, upon exposure, a rigid material may become temporarily malleable, allowing changes in geometry to be made. Upon removal of the condition or stimulus, the material may return to its original rigid state and geometry or it may return to its original rigid state with the new geometry. In the former case, such stimulus may be used to facilitate coupling an attachment device to an elastic positioning appliance. The stimulus may alter the geometry of the attachment device during insertion and placement of the appliance. Removal of the stimulus may allow the device to return to its original geometry for application of repositioning forces. In the latter case, such stimulus may be used to facilitate bonding of the attachment device to the surface of the dental feature. The stimulus may alter the state and geometry of the attachment device, or simply the base, to conform it to the surface of the dental feature to which it is to be bonded. Upon removal of the stimulus, the attachment device may remain in the new geometry, providing a larger contacting surface area for bonding.

Similarly, a malleable material may be molded into a desired form and polymerized by exposure to an environmental condition or stimulus. Such polymerization may permanently hold the material in the desired form. This may be useful in both constructing the attachment device and bonding the device to a dental surface. Malleable material is inserted in a mold of an attachment device. Polymerization, as described above, results in a rigid attachment device in the molded form. In a preferred embodiment, the mold of the attachment device may be an impression in the wall of an elastic positioning appliance. This may ensure proper surface geometry for association between the attachment device and the appliance. Likewise, polymerization of the material while the appliance is in place over the dental features may simultaneously bond the attachment device to the dental feature. This may ensure proper alignment of the attachment device and the receiving impression in the appliance, and it may also preclude the need for additional bonding materials.

Described herein are methods to produce and/or bond an attachment device to a dental feature. Such methods are applicable for use with elastic repositioning appliances or similarly fabricated devices and are as follows: 1) basic casting, 2) casting with polymerizing material and 3) computer-aided casting with polymerizing material. An example of basic casting involves producing two identical attachment devices by any means and comprised of any material(s). One attachment device may be placed in a desired location on a dental surface of the patient. The other attachment device may be placed in the identical location on a mold replicating at least the dental surface. An elastic positioning appliance or similar device may be formed over the mold containing the attachment device. Upon removal, a negative impression of the attachment device may be seen in the wall of the elastic positioning appliance. Therefore, when the appliance is inserted and seated in position by the patient, the impression in the appliance will correspond with the attachment device bonded to the dental surface. If the attachment device is to be used as a point of purchase to effect movement of the dental feature to which it is attached, the attachment device may be bonded to the dental feature in a position or orientation that differs from the mold. Therefore, when the appliance is inserted by the patient, the impression in the appliance will be slightly out of alignment with the attachment device. This will apply force to the attachment device, resulting in gradual repositioning of the device and underlying dental feature.

The method of casting with polymerizing material is similar to basic casting. Like basic casting, an attachment device of any design and material is placed in a desired location on a mold replicating at least the dental surface of interest. Again, an elastic positioning appliance or similarly fabricated device may be formed over the mold containing the attachment device, creating a negative impression of the attachment device in the wall of the appliance. At this point, a malleable polymerizing material may be placed into the negative impression in the appliance. When the appliance is inserted and seated in position in the oral cavity, the polymerizing material will be in contact with the dental surface and will be in the proper position. The material may be polymerized by any means, typically by an external stimulus or environmental condition. Polymerization may simultaneously harden the material and bond the material to the dental surface. Upon removal of the appliance, the formed attachment device may remain in place on the dental surface.

The method of computer-aided casting with polymerizing material is similar to the methods described above, yet differs in the steps of creating the appliance. Here, a 3-D-computerized image of the attachment device is virtually placed in a desired location on an image of the dental surface. A mold is produced from the images using any computer-guided model fabrication system, such as stereolithography, CNC machining, and laser machining. The result is a mold of at least the dental surface of interest with a replica of the attachment device in proper position. At this point, an elastic positioning appliance or similarly fabricated device may be formed over the mold containing the attachment device, creating a negative impression of the attachment device in the wall of the appliance. Again, a malleable polymerizing material may be placed into the negative impression in the appliance. When the appliance is inserted and seated in position in the oral cavity, the material may be polymerized, leaving a formed attachment device in place on the dental surface when the appliance is removed.

An additional method is also described to produce and/or bond an attachment device to a dental feature. Two such methods are applicable for use with any dental appliances. The first involves a multi-tooth template which may be used to produce and/or bond an attachment device to a dental feature. The multi-tooth template may be thin and flexible to fit over multiple dental features at once, allowing multiple attachment devices to be placed at the same time. Receptacles may be present in the template to receive a polymerizing material. When the template is inserted and seated in position in the oral cavity, the polymerizing material will be in contact with the dental surface and will be in the proper position. The material may be polymerized by any means, typically by an external stimulus or environmental condition. Polymerization may simultaneously harden the material and bond the material to the dental surface. Upon removal of the template, the formed attachment device may remain in place on the dental surface. This method may be similar or identical to casting with polymerizing material and computer-aided casting with polymerizing material, however it may differ in that the template may not be used as the repositioning appliance. This difference may afford the use of template designs that are not applicable to repositioning appliances. For example, the template may be comprised of a material that is unsuitable for a repositioning appliance, or it may contain additional design features, such as handles, that would interfere with such usage. Similarly, the template may be fabricated from a mold of the patient's present tooth configuration, rather than the tooth configuration prescribed by an elastic positioning appliance. This may facilitate the method of attachment device production and/or bonding due to the closer fit of the template to the tooth configuration.

The second involves a single-tooth template which may be used to produce and/or bond an attachment device to a dental feature. The single-tooth template may be more rigid and may fit over a single dental feature. The template may be comprised of one or more receptacles to receive polymerizing material. When applied to the target surface of the dental feature, the material may be polymerized by any means previously described. The resulting attachment device is properly shaped and bonded in place. Alternatively, the single-tooth template may be comprised of a receptacle that is rigid, to receive the polymerizing material, surrounded by a thin, film-like portion of material that conforms to the dental feature. The thin, flexible area may contain an adhesive with which to hold the template in place on the dental feature. The material may then be polymerized to form the attachment device. When the procedure is complete, the template may be peeled off and discarded.

Single-tooth and multi-tooth templates may allow the production and placement of one or more attachment devices to a dental feature independent of the geometry of certain adjacent dental features. Thus, a template may be used throughout various stages of orthodontic repositioning treatment. This may be useful to replace an attachment device which has broken off mid-treatment or to place new attachment devices throughout treatment. As described above, at least one receptacle may be present in the template to receive a polymerizing material. When the template is inserted and seated in position in the oral cavity, the polymerizing material will be in contact with the dental surface and will be in the proper position. The material may be polymerized by any means, typically by an external stimulus or environmental condition. Polymerization may simultaneously harden the material and bond the material to the dental surface. Upon removal of the template, the formed attachment device may remain in place on the dental surface. Alternatively, templates may be used to bond any attachment device to a dental feature surface. For example, a pre-fabricated attachment device may be bonded to a surface with the use of a template. An attachment device may be inserted in a receptacle of a template, adhesive applied to the base of the attachment device and the template applied to the dental surface. After bonding has occurred, the template may be removed. Thus, the template may provide proper positioning and orientation. Likewise, a template may be used to form an attachment device using a polymerizing material, and then used again to bond the attachment device to a dental surface.

Also described herein is a method to improve the production of templates or elastic positioning appliances. In a preferred embodiment, additional structures are provided in the mold of the dental feature with desired attachment device. The structures may be of any geometry and are typically placed near the gingival surface. When a template or appliance is thermoformed over the mold and additional structures, the structures provide a protrusion which aids in drawing the template or appliance from the mold. The protrusion may then be removed before use.

Also described herein is a method to further improve the production of templates or elastic positioning appliances. In some cases, it may be desired to alter a template or appliance after it has been removed from a mold. Such alterations may include trimming edges or removing portions to prevent interference with specific devices or dental features. For example, it may be desirable to produce an elastic appliance with a window in a particular location corresponding to the placement of an attachment device. To ensure proper location of the window, a structure may be provided in the mold at the same location to aid in the creation of the window. In a preferred embodiment, a structure of spherical geometry may be provided in the mold at the desired location. Thermoforming of the appliance may result in a spherical protrusion at the location of the structure. After removal of the appliance from the mold, the spherical protrusion may be removed by cutting, filing, sawing, or any other means of removal. Thus, a window with a shape corresponding to the cross section of the structure, in this case a circle, may remain. As a result, a template or positioning appliance may be produced to cover desired dental features or to provide windows to expose such features.

### BRIEF DESCRIPTION OF THE DRAWINGS

Fig. 1 illustrates a patient's tooth having an attachment device of the present invention bonded thereon.
Figs. 2A and 2B illustrate exemplary attachment devices having broad bonding bases attached thereto.
Figs. 3A and 3B illustrate attachment devices similar to those illustrated in Figs. 2A and 2B, except that the attachment base is integral with the attachment body.
Figs. 4 and 4A are top and side view, respectively, of an exemplary attachment device having a hemispherical attachment body in the form of a simple "bump." Fig. 4B is a perspective view of similar attachment device with an elongated attachment body.
Fig. 5 illustrates an attachment device having an elastic band connected to a hook portion thereof.
Fig. 6 illustrates an attachment device similar to that shown in Fig. 4 which is attached to a positioning appliance via an adhesive layer.
Fig. 7 illustrates an exemplary wedge-shaped attachment device of the present invention in combination with a dental positioning appliance having cavities formed therein for removably receiving the attachment devices.
Fig. 8 is a detailed view of the attachment device of Fig. 7.
Figs. 9A-9L are perspective views of a series of exemplary attachment devices with sloping angles constructed in accordance with the principles of the present invention.
Figs. 10A-10F are front views of a series of attachment devices having wedge-shaped structures with different front end geometries.
Fig. 11 illustrates a method for intruding a tooth located between a pair of teeth having attachment devices thereon.
Figs. 12A and 12B illustrate the mounting of an attachment device to a tooth surface.
Figs. 13A-13D illustrate an embodiment of the method of basic casting.
Figs. 14A-14C illustrates features of the method of casting with a polymerizing material.
Fig. 14D includes a series of cross-sectional views further describing the method of Figs. 14A-14C.
Figs. 15A-15C illustrates features of the method if computer-aided casting with polymerizing material.
Fig. 16 illustrates an embodiment of a multi-tooth template having a handle for use in *in situ* formation of attachment devices according to the methods of the present invention.
Fig. 17A and 17B illustrate embodiments of single-tooth templates having handles for use in the methods of the present invention.
Fig. 18 illustrates a method according to the present invention for forming a window in a tooth positioning appliance using a feature formed in a mold according to the methods of the present invention.

### DESCRIPTION OF THE SPECIFIC EMBODIMENTS

Described herein are systems and methods for removably attaching a dental positioning appliance to the dental features of a patient during orthodontic treatment. Examples involve elastic repositioning appliances or similarly fabricated devices, however the present disclosure is applicable to any type of removable appliance. Systems for removably attaching an appliance typically involve the use of one or more attachment devices positioned on at least one dental feature.

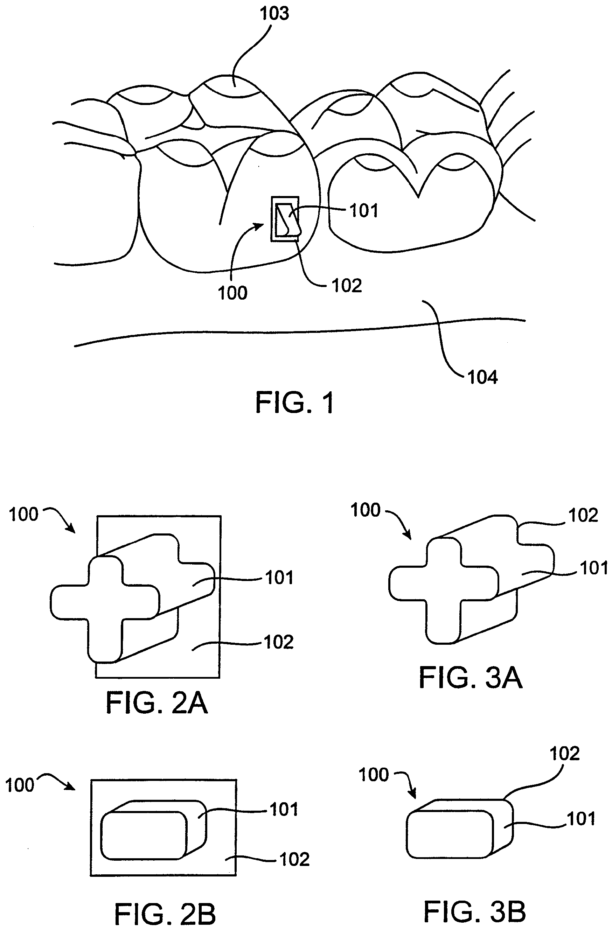

Referring to Fig. 1, an example of an attachment device 100 is shown bonded to a tooth 103 above the gingiva 104. The attachment device 100 may be comprised of an attachment body 101 having a base 102, which may be integral or separate and permanently or removably joined. Additional examples of attachment bodies 101 are depicted in Fig. 2 and Fig. 3. As seen in Fig. 2, the attachment device 110 may have a base 102 which is broader than the attachment body 102 to increase bonding surface area. Alternatively, the base 102 may simply be an end of the attachment body 101 for direct bonding to the tooth 103. Corresponding examples with such bases 102 are depicted in Fig 3. The devices 100 may be bonded to any surface of a dental feature and may be located in one or more locations.

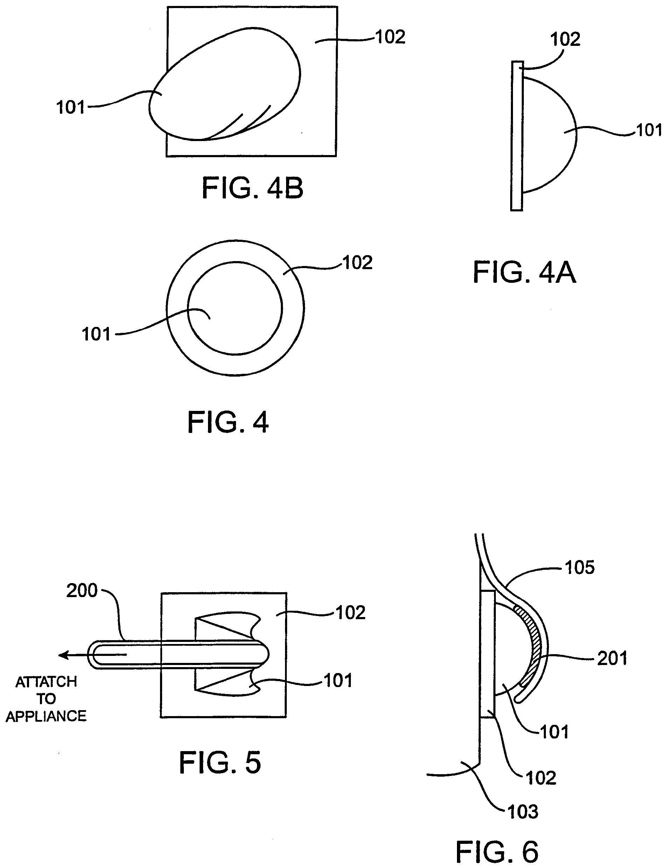

Specific shapes and designs may be particularly useful in certain locations. For example, attachment devices 100 positioned on the lingual surfaces of the teeth would characteristically prevent irritation to contacting tissues, such as the tongue. Fig. 4 depicts preferred examples of round-shaped attachment bodies 101 for such a purpose. A side view of such an attachment device 100 is shown in Fig. 4A. Bases 102 may be of any shape, thickness and orientation in relation to an attachment body 101. Likewise, a base 102 may have more than one discrete attachment body 101.

Additional devices may be used in conjunction with an attachment body 101 to attach an appliance to an attachment device 100. For example, adhesives, flexible bands or connecting ligatures may be used in conjunction with the design of the attachment body 101 to aid in connection to the appliance. Fig. 5 depicts an attachment body 101 with a flexible band 200 to attach the body 101 to an appliance (not shown). The body 101 is shaped so as to receive the band 200 and hold it in place, for example in a hook shape. Fig. 6 is side view illustrating an attachment body 101 with an adhesive 201 to aid in attachment to an appliance 105. Such an adhesive 201 may be any type of biocompatible material which may be applied by the patient, provided by the attachment device 100 or provided by the appliance 105. Likewise, the adhesive 201 may provide adhesive qualities over variable lengths of time.

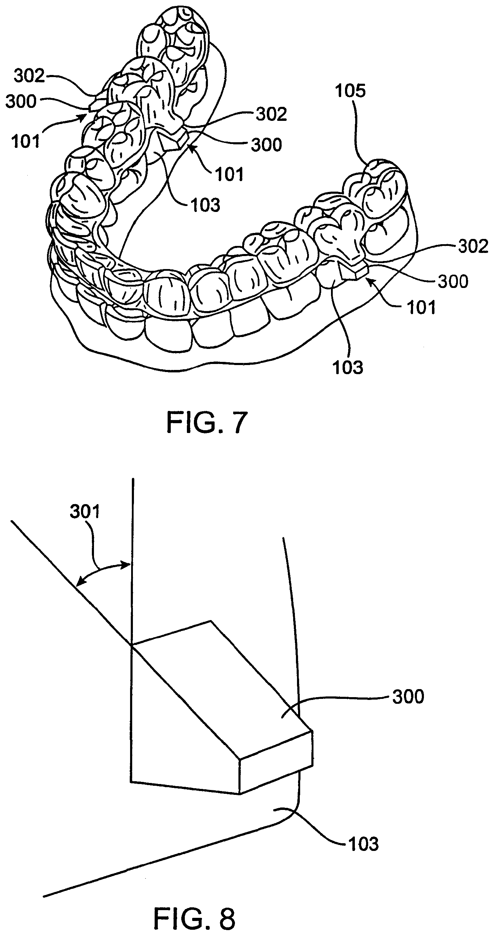

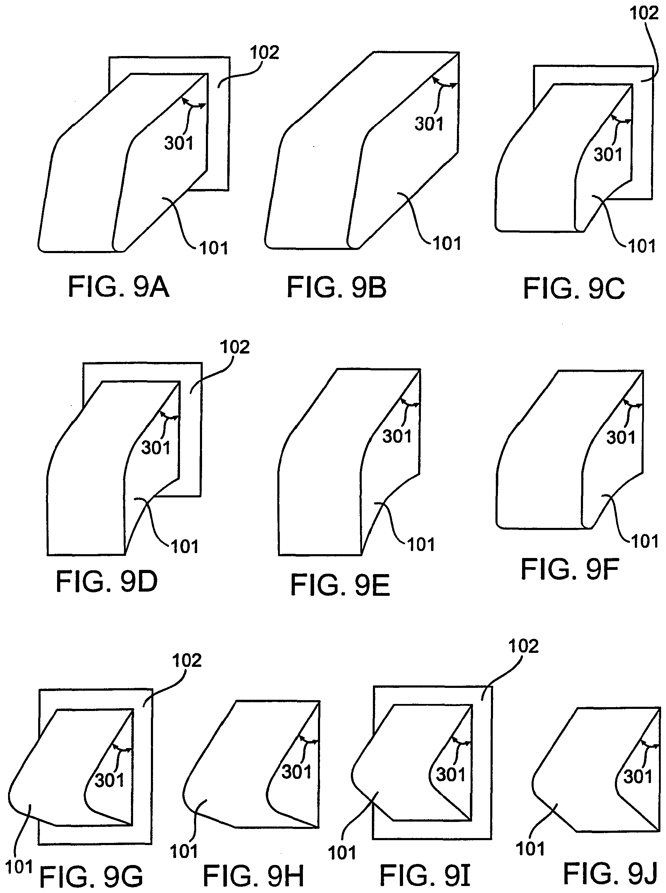

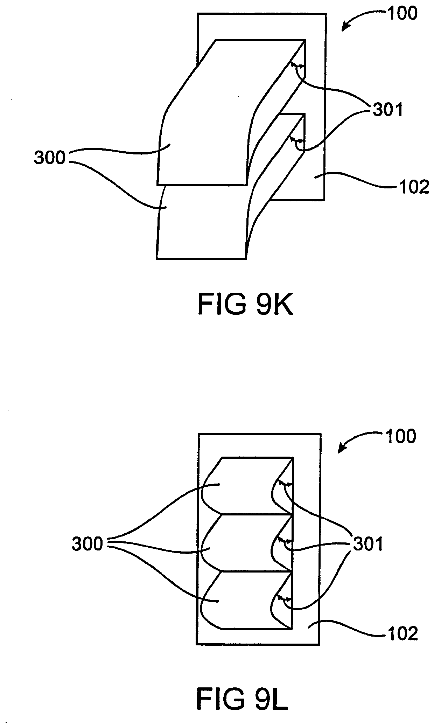

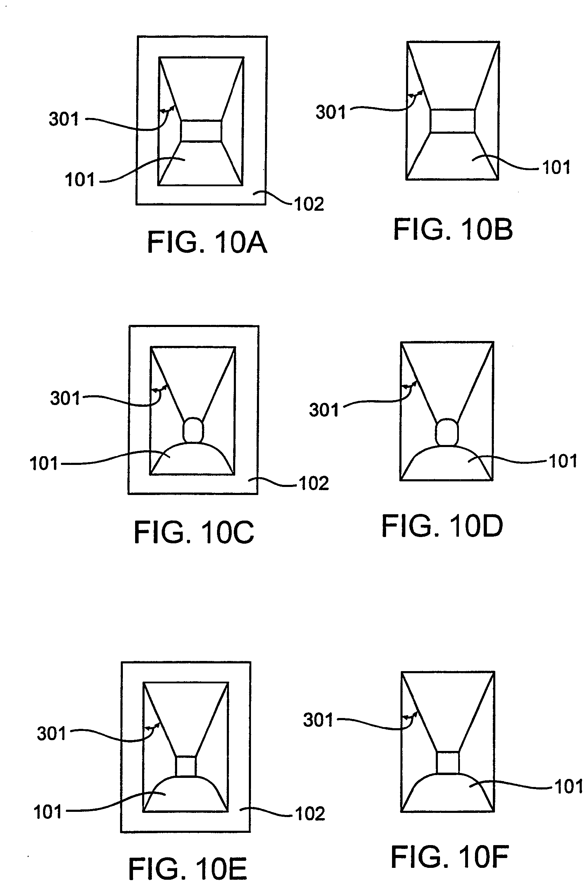

Referring now to Fig. 7, a preferred example of an attachment body 101 design is illustrated for use in aiding the proper seating of a removable elastic repositioning appliance 105 and anchoring the appliance 105 in place to apply repositioning forces. Such attachment bodies 101 may be located on any surface of a dental feature and may be placed singly or in groups. The design of the attachment body 101 may include a structure 300 which protrudes perpendicularly from the surface of the tooth 103. As shown in Fig. 8, the structure 300 may contain a sloping angle 301, from the surface of the tooth 103 to the opposing end of the structure 300, which is preferably less than 90 degrees. Fig. 9A presents a perspective view of a variety of attachment devices 100 having sloping angles 301 as described. Fig. 9B presents a perspective view of attachment devices 100 having a series protruding structures 300 with sloping angles 301. These designs may provide a means for a type of ratcheting action that would allow an appliance to be seated or positioned at differing levels. It may be appreciated that such designs may serve the same function without sloping angles 301 and with differing geometries. Similarly, Fig. 10 presents a front view of a variety of attachment devices 100 having sloping angles 301.

Referring back to Fig. 7, when the elastic positioning appliance 105 is inserted for placement, the protruding structure 300 may grossly align with a matching negative impression 302 of the structure 300 formed into the appliance 105. As the appliance 105 is seated, the slope of the protruding structure 300 may guide the appliance 105 into the proper position. Once in position, the attachment device 100 may serve as an anchor for the appliance 105 to apply repositioning forces. Additionally, the elastic appliance 105 and/or the attachment device 100 may change in shape, stiffness or orientation to implement such anchoring. These changes may be the result of state changes of one or more layers of the material when subjected to a certain environmental condition, such as non-physiologic pH, temperature, ionic strength or external stimulus.

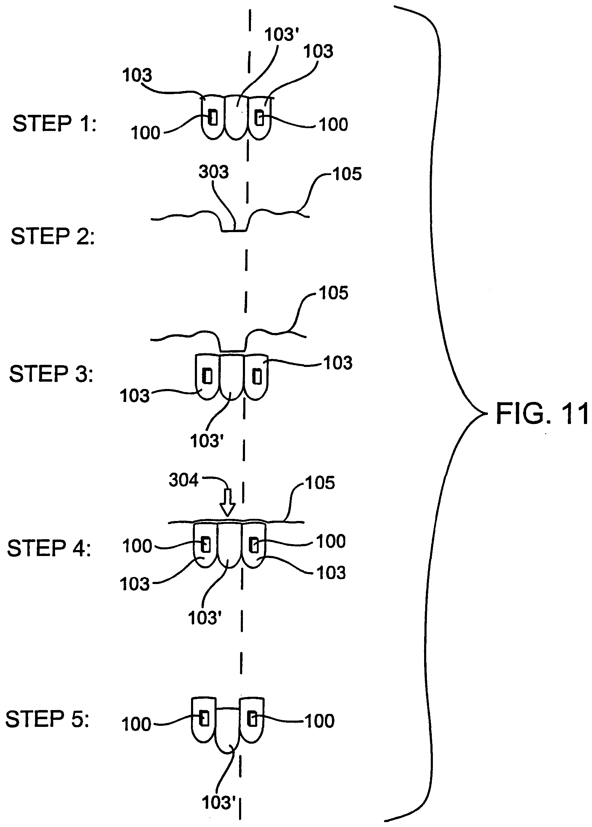

Repositioning forces as a result of anchoring may take many forms. In a preferred embodiment illustrated in Fig. 11, attachment devices 100 may be placed to serve as anchors to apply directed intrusive repositioning forces. As shown in Step 1, two attachment devices 100 may be placed on each of two teeth 103 located on opposites sides of one or a contiguous group of between teeth 103'. In Step 2, an elastic repositioning appliance 105 is produce with an inset profile 303 at the location in which intrusive force is to be applied. In Step 3, the appliance 105 is inserted for placement over the teeth 103,103'. In Step 4, the appliance 105 is attached to the attachment devices 100 which serve to anchor the appliance 105. As a result, intrusive forces, depicted by a downward arrow 304, are applied to the between teeth 103'. Over time, the intrusive forces will affect intrusion of the between teeth 103', as shown in Step 5. It may be appreciated that the profile of the appliance 105 may take a variety of forms to create intrusive forces, depending on the overall configuration of the teeth 103 and the between teeth 103'. For example, in the case where the between teeth 103' are initially more extruded than the adjacent teeth 103, the appliance 105 may have a profile that is generally flat, with no inset profile 303. Thus, when the appliance 105 is attached to the attachment devices 100, intrusive forces will again be applied to the between teeth 103'. The use of bonded devices, such as attachment devices 100, to apply repositioning forces to a tooth without bonded devices is distinct in that it is counterintuitive to the methods of conventional orthodontics in which brackets are bonded to the teeth that require repositioning.

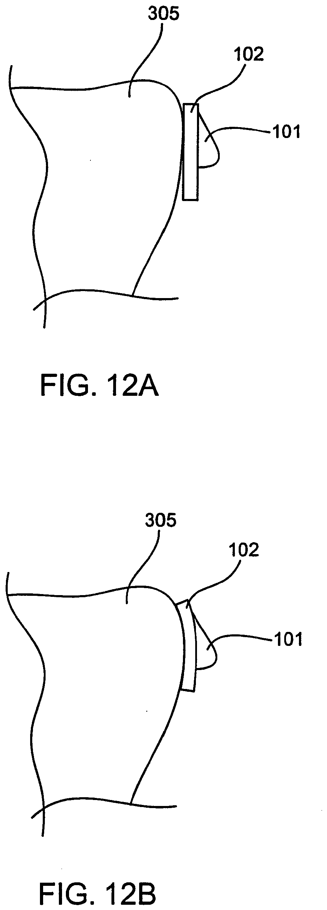

As previously described, the attachment devices 100 may be constructed from a variety of materials, including materials which have been formulated to be sensitive to an environmental condition or external stimulus. For example, upon exposure, a rigid material may become temporarily malleable, allowing changes in geometry to be made. Upon removal of the condition or stimulus, the material may return to its original rigid state with the new geometry. This may be particularly useful in conforming the geometry of an attachment device 100 to better interface an uneven or curved surface. As shown in Fig. 12A, an attachment device 100 may be originally constructed to have an attachment base 102 which does not conform to the dental surface 305 to which it is to be bonded. In this case, the material may be exposed to a stimulus to which it is sensitive, initiating a state change in the material. Such a stimulus may be a change in the oral environment to a non-physiologic pH, temperature, ionic strength or liquid absorption. Likewise, the stimulus may be of an external source such as light, magnetism, electricity, radiowaves, or chemicals. Such a state change may allow the material to become flexible so the attachment base 102 may conform to the dental surface 305, as shown in Fig. 12B.

Similarly, a permanent state change in the material may occur as a result of applying a stimulus. Thus, the material may be malleable in its initial state, allowing it to be molded into a desired shape. The material may then be polymerized due to application of a stimulus. Likewise, polymerization may occur over time from the point of initial formulation, as in the case of an air or moisture cure. Polymerization may simultaneously harden the material and form a bond between the material and any interfacing surface.

A series of methods are provided based on these polymerization characteristics to produce and/or bond an attachment device 100 to a dental feature, such as a tooth 103. Three preferred examples are applicable for use with elastic positioning appliances and are as follows: 1) basic casting, 2) casting with polymerizing material and 3) computer-aided casting with polymerizing material.

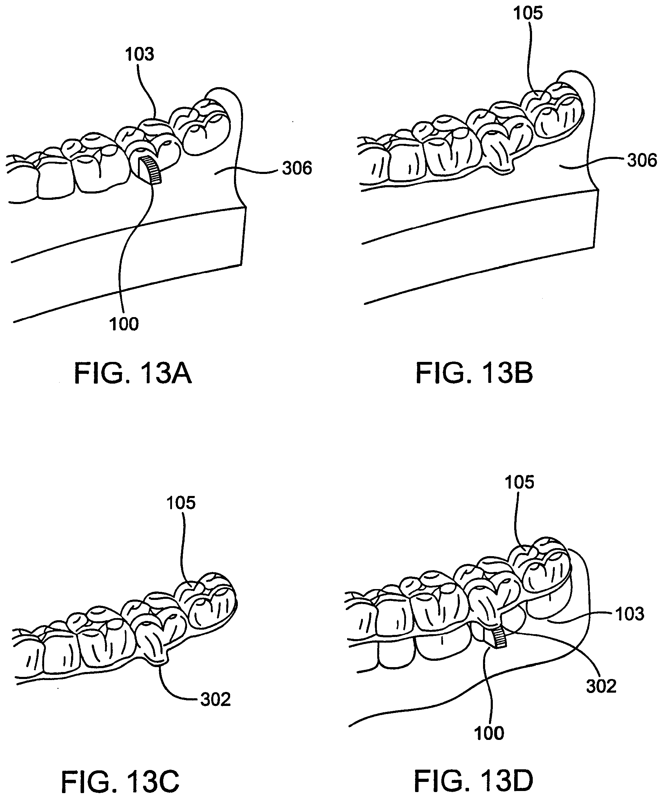

Figs. 13A-D characterize an embodiment of the method of basic casting. Basic casting involves first producing two identical attachment devices 100 by any means. As shown in Fig. 13A, one attachment device 100 may be placed in a desired location on a mold 306 which replicates the dental feature of interest, in this case a tooth 103. As shown in Fig. 13B, an elastic positioning appliance 105 may be formed over a mold 306 containing the attachment device 100. This is typically accomplished by heating a thermoformable polymer material and applying vacuum or pressure to form the polymer to the mold. Alternatively, reaction casting may be used to produce such an appliance. Upon removal, Fig 13C, a negative impression 302 of the attachment device may be seen in the wall of the appliance 105. The other attachment device 100 is placed in the identical location and orientation on the dental feature of the patient corresponding to the mold 306. When the appliance 105 is inserted and seated in position, the impression 302 in the appliance 105 will correspond with the attachment device 100 bonded to the tooth 103, as illustrated in Fig. 13D.

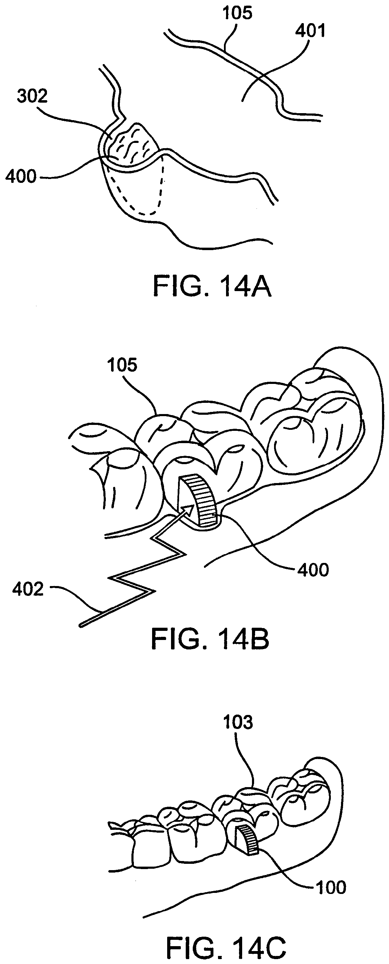

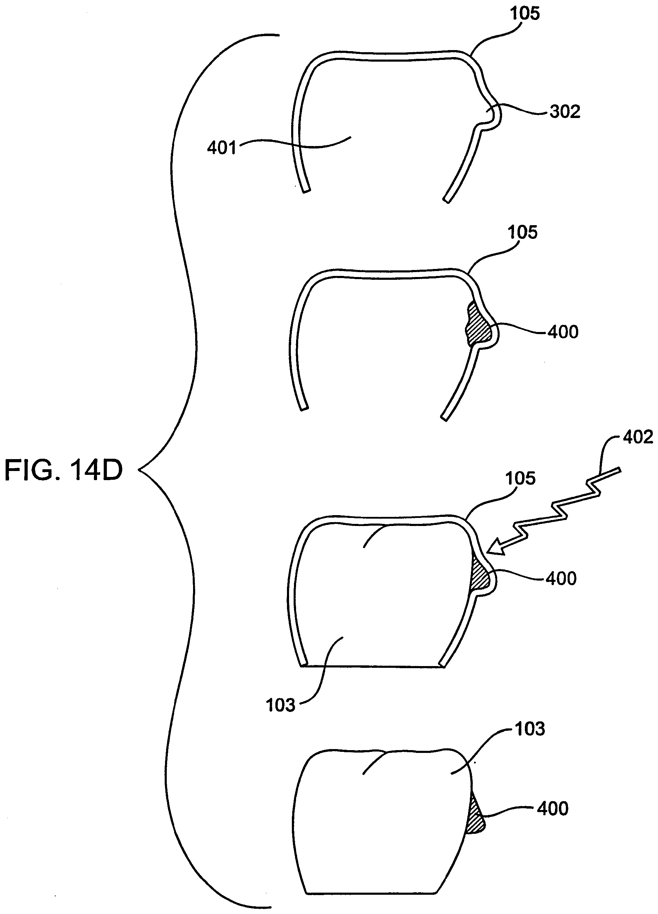

The method of casting with a polymerizing material is similar to the method of basic casting. In one embodiment, an elastic positioning appliance 105 is formed over a mold 306 containing an attachment device 100, as previously depicted in Figs 13A-C. At this point, a malleable polymerizing material 400 is placed into the negative impression 302 in the appliance 105. Fig. 14A is an enlarged view of the underside of a portion of the appliance 105, revealing a receiving cavity 401 for a tooth 103 and the negative impression 302 of an attachment device 100 filled with a polymerizing material 400. When the appliance 105 is seated in position in the oral cavity, Fig. 14B, the polymerizing material 400 will be in contact with the desired dental surface, in this case a tooth 103, and will be positioned in the proper location. The material 400 may be polymerized (depicted by jagged arrow 402) by any means, such as an external stimulus. Upon removal of the appliance 105, the formed attachment device 100 may remain in place on the tooth 103, as shown in Fig. 14C. Cross-sectional views of this method or presented in Fig. 14D.

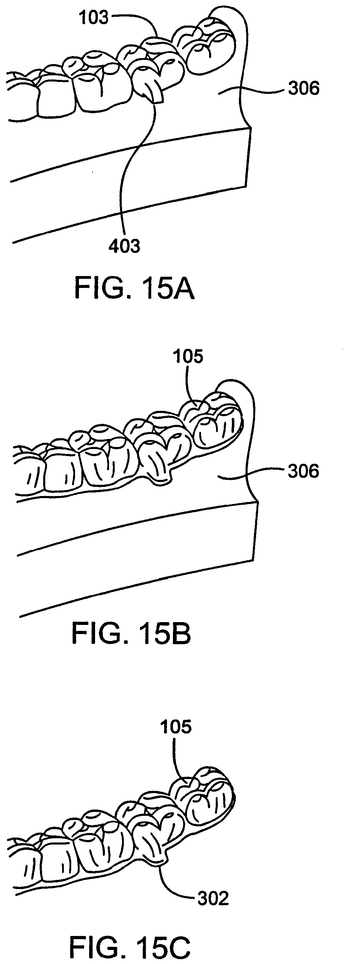

The method of computer-aided casting with polymerizing material 400 is similar to the methods described above, yet differs in the steps of creating the appliance 105. In one embodiment, a computerized image of the attachment device 100 is virtually placed in a desired location on an image of the dental surface. From these images, a mold 306 is produced comprising the dental surface of interest, in this case a tooth 103, with an attachment device replica 403 in proper position. At this point, an elastic positioning appliance 105 may be formed over the mold 306, as seen in Fig. 15A. Upon removal, Fig 15B, a negative impression 302 of the attachment device 100 may be seen in the wall of the appliance 105. At this point, the attachment device 100 may be formed and bonded to the dental feature by methods previously depicted in Figs 14A-C.

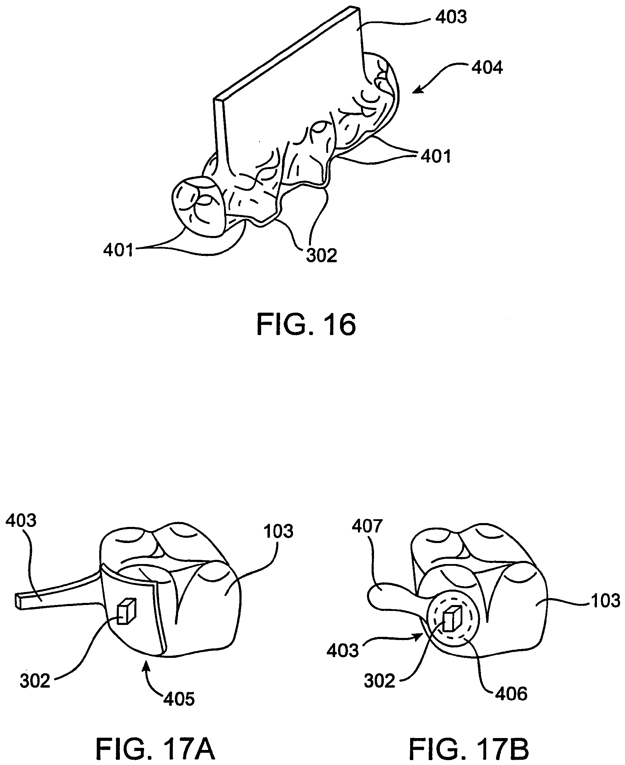

Two additional methods are provided to produce and/or bond an attachment device 100 to a dental feature, such as a tooth 103. These embodiments are applicable for use with any dental appliance. The first embodiment involves a multi-tooth template. The multi-tooth template may be similar or identical to an elastic repositioning appliance, and it may be used for casting with polymerizing material and computer-aided casting with polymerizing material, as described above. However, it may differ in that the template may not be used as the repositioning appliance. Therefore, multi-tooth template designs may include features that are not applicable to such use. For example, in Fig 16, one embodiment depicts a type of handle 403 with which to easily place and remove the multi-tooth template 404. As shown, the template 404 may contain receiving cavities 401 for only a select portion of teeth and it may include negative impressions 302 for attachment devices 100 on more than one tooth 103.

The second embodiment involves a single-tooth template. The single-tooth template is similar to the multi-tooth template 404, however it may be more rigid as it is designed to fit over a single dental feature. As shown in Fig 17A, one embodiment may contain a portion of a receiving cavity 401 which conforms to a portion of the surface of the target tooth 103. It may also contain a type of handle 403 to aid in placement of the single-tooth template 405. Production and bonding of an attachment device 100 to the tooth 103 may be accomplished by casting with polymerizing material or computer-aided casting with polymerizing material. Similarly, an additional embodiment of a single-tooth template 405 may be seen in Fig. 17B. Here the template 405 may be thin and flexible to conform to a portion of a dental feature. It may contain adhesive ring 406 around the negative impression 302 of the attachment device 100. The adhesive ring 406 will hold the template 405 in place on the dental feature, in this case a tooth 103, throughout the casting with polymerizing material or computer-aided casting with polymerizing material to produce and bond the attachment device 100. A pull-tab 407 may be present to facilitate a peeling removal of the template 405.

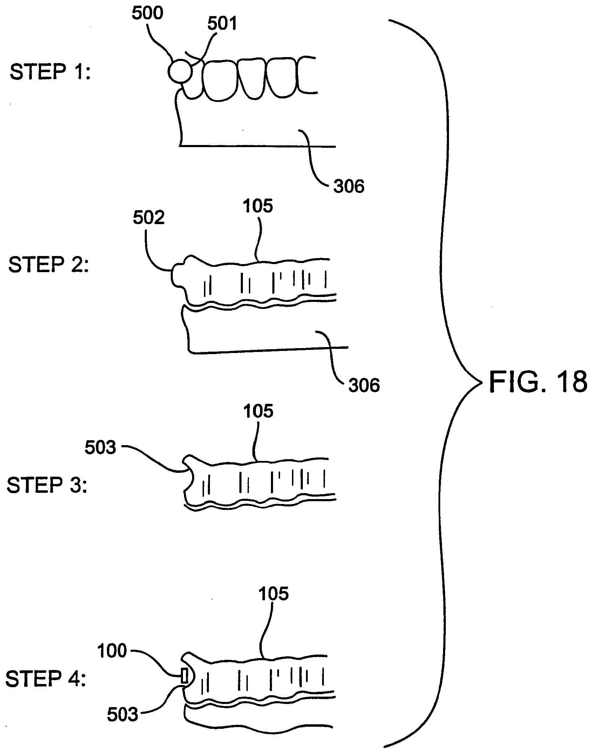

A method to further aid in production of templates or elastic positioning appliances in depicted in Fig. 18. Here, an embodiment of an improved method for producing a window of particular shape and location in an elastic appliance is presented to prevent interference with specific devices or dental features. As shown in Step 1, a mold 306 is created with an added structure 500 in the location where the window is desired. The shape of the structure 500 should provide a cross-section (dashed line 501) that will form the shape of the window. In this example, the structure 500 is a sphere having a circular cross-section 501. In Step 2, a polymer sheet is thermoformed over the mold 306, and an elastic appliance 105 is produced with a spherical protrusion 502 in the location of the structure 500. After removal of the appliance 105 from the mold 306, the spherical protrusion 502 may be removed, as shown in Step 3, leaving a window 503 with the same shape as the cross-section 501 of the structure 500. In Step 4, the appliance 105 may be positioned on the dental features of the patient, allowing an attachment device 100 to be accessible through a window 503.

## Claims

1. In combination:
a template (404) fabricated from a mould of a patient's actual tooth configuration, for forming on a target tooth an attachment device (100) to anchor a dental repositioning appliance having tooth receiving cavities in place on a patient's teeth to enable the repositioning appliance to apply force to reposition the teeth from their actual configuration, the template having a cavity conforming to a portion of the surface of the target tooth and a receptacle to receive polymerisable material (400) to form the attachment device; and
a polymerisable material (400) placed in the receptacle (302) to form the attachment device, wherein the polymerisable material has a first state in which it is malleable and a second state in which it is rigid.

2. A combination according to claim 1, wherein the receptacle (302) defines an attachment having a shape arranged to protrude perpendicularly from the surface of the dental feature, said structure having a geometry arranged to engage a feature in a dental positioning appliance.

3. A combination according to claim 2, wherein the receptacle (302) defines an attachment having a shape which includes a sloping angle of less than 90 degrees from the surface of the dental feature to the opposing end of the protruding structure to aid in positioning the appliance.

4. A combination according to any preceeding claim, wherein the template is arranged to allow an external stimulus (402) to be applied to the receptacle (302) via the template.

5. A combination according to claim 4, wherein the external stimulus (402) is light, magnetism, electricity, radiowaves, or chemicals.

6. A combination according to any preceeding claim, the template further comprising a handle portion (403) for positioning and/or removing the template.

7. A combination according to any preceeding claim, wherein the template is flexible to conform with the dental feature.

8. A combination according to any preceeding claim, wherein the receptacle defines an attachment (105) comprising a bump, bead, wedge, hook, clasp, band, bracket, button, snap, spring, lever, rod, tube, coil, indent and/or other protrusion.

9. A combination according to claim 8, wherein the template is arranged to be removable from the dental feature by peeling.

10. A combination according to claim 9, wherein the receptacle is rigid.

11. A combination according to claim 10, the template further comprising a pull tab (407).

12. A combination according to claim 10 or 11, the template further comprising an adhesive portion (406) disposed about the receptacle.

13. A combination according to claim 1 wherein the template comprises a material which is unsuitable for said repositioning appliance wherein optionally at least one of:
the template is a multi tooth template;
the template is thin and flexible.

14. A method of forming one or more dental attachment devices on a surface of a target tooth, the method comprising:
providing a dental attachment mould having a receptacle (302) and a cavity conforming to a portion of the surface of the tooth;
placing in the receptacle polymerisable material for forming a dental attachment device; and
polymerising the polymerisable material.

## Patentansprüche

1. Kombination aus:
einer aus einem Abdruck der wirklichen Zahnkonfiguration eines Patienten hergestellten Schablone (404) zum Bilden eines Befestigungsgerätes (100) auf einem Zielzahn, um die zahnärztliche Neupositionierungsvorrichtung, die Zahnaufnahmeräume aufweist, an einer Stelle auf Patientenzähnen zu verankern, um der Neupositionierungsvorrichtung zu ermöglichen, Kraft aufzubringen, um die Zähne aus ihrer wirklichen Konfiguration neu zu positionieren, wobei die Schablone einen Raum entsprechend einem Anteil der Oberfläche des Zielzahnes sowie ein Behältnis aufweist, um polymerisierbares Material (400) aufzunehmen, um das Befestigungsgerät zu bilden; und
ein polymerisierbares Material (400), das in dem Behältnis (302) platziert ist, um das Befestigungsgerät zu bilden, wobei das polymerisierbare Material einen ersten Zustand, in welchem es verformbar ist, und einen zweiten Zustand, in welchem es steif ist, aufweist.

2. Kombination gemäß Anspruch 1, wobei das Behältnis (302) eine Befestigung definiert, welche eine Gestalt aufweist, die angeordnet ist, um senkrecht von der Oberfläche des zahnärztlichen Merkmals herauszuragen, wobei die Struktur eine Geometrie aufweist, die angeordnet ist, um ein Merkmal in einer zahnärztlichen Positionierungsvorrichtung in Eingriff zu nehmen.

3. Kombination gemäß Anspruch 2, wobei das Behältnis (302) eine Befestigung definiert, welche eine Gestalt aufweist, welche einen geneigten Winkel von weniger als 90° von der Oberfläche des zahnärztlichen Merkmals zu dem gegenüberliegenden Ende der herausragenden Struktur beinhaltet, um bei der Positionierung der Vorrichtung zu helfen.

4. Kombination gemäß einem der vorangegangenen Ansprüche, wobei die Schablone angeordnet ist, um einem externen Reiz (402) zu erlauben, über die Schablone auf das Behältnis (302) aufgebracht zu werden.

5. Kombination gemäß Anspruch 4, wobei es sich bei dem externen Reiz (402) um Licht, Magnetismus, Elektrizität, Funkwellen oder Chemikalien handelt.

6. Kombination gemäß einem der vorangegangenen Ansprüche, wobei die Schablone weiterhin einen Griffbereich (403) zur Positionierung und/oder Entfernung der Schablone umfasst.

7. Kombination gemäß einem der vorangegangenen Ansprüche, wobei die Schablone flexibel ist, um mit dem zahnärztlichen Merkmal übereinzustimmen.

8. Kombination gemäß einem der vorangegangenen Ansprüche, wobei das Behältnis eine Befestigung (105) umfassend ein/e/en Beule, Wulst, Klemme, Haken, Klammer, Band, Bügel, Taste, Druckknopf, Feder, Hebel, Stange, Rohr, Spule, Kerbe und/oder andere Auswuchtung definiert.

9. Kombination gemäß Anspruch 8, wobei die Schablone angeordnet ist, um durch Peeling von dem zahnärztlichen Merkmal entfernbar zu sein.

10. Kombination gemäß Anspruch 9, wobei das Behältnis steif ist.

11. Kombination gemäß Anspruch 10, wobei die Schablone weiterhin eine Zuglasche (407) umfasst.

12. Kombination gemäß Anspruch 10 oder 11, wobei die Schablone weiterhin einen um das Behältnis angeordneten adhäsiven Anteil (406) umfasst.

13. Kombination gemäß Anspruch 1, wobei die Schablone weiterhin ein Material umfasst, welches ungeeignet für die Neupositionierungsvorrichtung ist, wobei mindestens eines der Folgenden gilt:
die Schablone ist eine Mehrfachzahnschablone;
die Schablone ist dünn und flexibel.

14. Verfahren zum Bilden von einem oder mehreren zahnärztlichen Befestigungsgeräten auf einer Oberfläche eines Zielzahns, wobei das Verfahren Folgendes umfasst:
Bereitstellen einer zahnärztlichen Befestigungsform, die ein Behältnis (302) und einen Raum entsprechend einem Anteil der Oberfläche des Zahns aufweist;
Platzieren von polymerisierbarem Material in dem Behältnis, um ein zahnärztliches Befestigungsgerät zu bilden; und
Polymerisieren des polymerisierbaren Materials.

## Revendications

1. En combinaison :
un gabarit (404) fabriqué à partir d'un moule d'une véritable configuration dentaire d'un patient, pour former sur une dent cible un dispositif de fixation (100) pour ancrer un appareil de repositionnement dentaire ayant des cavités de réception de dents en place sur les dents d'un patient pour permettre à l'appareil de repositionnement d'appliquer la force pour repositionner les dents à partir de leur véritable configuration, le gabarit ayant une cavité se conformant à une partie de la surface de la dent cible et un réceptacle pour recevoir du matériau polymérisable (400) afin de former le dispositif de fixation ; et
un matériau polymérisable (400) placé dans le réceptacle (302) pour former le dispositif de fixation, dans lequel le matériau polymérisable a un premier état dans lequel il est malléable et un deuxième état dans lequel il est rigide.

2. Combinaison selon la revendication 1, dans laquelle le réceptacle (302) définit une fixation ayant une forme agencée pour faire saillie perpendiculairement de la surface de la caractéristique dentaire, ladite structure ayant une géométrie agencée pour mettre en prise une caractéristique dans un appareil de positionnement dentaire.

3. Combinaison selon la revendication 2, dans laquelle le réceptacle (302) définit une fixation ayant une forme qui comprend un angle d'inclinaison inférieur à 90 degrés à partir de la surface de la caractéristique dentaire jusqu'à l'extrémité opposée de la structure en saillie afin d'aider à positionner l'appareil.

4. Combinaison selon l'une quelconque des revendications précédentes, dans laquelle le gabarit est agencé pour permettre d'appliquer un stimulus externe (402) sur le réceptacle (302) via le gabarit.

5. Combinaison selon la revendication 4, dans laquelle le stimulus externe (402) est la lumière, le magnétisme, l'électricité, des ondes radio, ou des produits chimiques.

6. Combinaison selon l'une quelconque des revendications précédentes, le gabarit comprenant en outre une partie de poignée (403) pour positionner et/ou retirer le gabarit.

7. Combinaison selon l'une quelconque des revendications précédentes, dans laquelle le gabarit est souple pour se conformer à la caractéristique dentaire.

8. Combinaison selon l'une quelconque des revendications précédentes, dans laquelle le réceptacle définit une fixation (105) comprenant une bosse, un bourrelet, une cale, un crochet, un fermoir, une bande, un bracket, un bouton, un encliquetage, un ressort, un levier, une tige, un tube, une spire, une indentation et/ou une autre saillie.

9. Combinaison selon la revendication 8, dans laquelle le gabarit est agencé pour être amovible de la caractéristique dentaire par pelage.

10. Combinaison selon la revendication 9, dans laquelle le réceptacle est rigide.

11. Combinaison selon la revendication 10, le gabarit comprenant en outre une languette de traction (407).

12. Combinaison selon la revendication 10 ou 11, le gabarit comprenant en outre une partie adhésive (406) disposée autour du réceptacle.

13. Combinaison selon la revendication 1 dans laquelle le gabarit est composé d'un matériau qui est inapproprié pour ledit repositionnement de l'appareil dans laquelle facultativement au moins l'un de :
le gabarit est un gabarit à plusieurs dents ;
le gabarit est fin et souple.

14. Procédé pour former un ou plusieurs dispositifs de fixation dentaire sur une surface d'une dent cible, le procédé comprenant les étapes consistant à :
fournir un moule de fixation dentaire ayant un réceptacle (302) et une cavité se conformant à une partie de la surface de la dent cible ;
placer dans le réceptacle du matériau polymérisable pour former un dispositif de fixation dentaire ; et
polymériser le matériau polymérisable.
